(19) Europäisches Patentamt
European Patent Office
Office européen des brevets

(11) Veröffentlichungsnummer: **0 386 582 A2**

(12) **EUROPÄISCHE PATENTANMELDUNG**

(21) Anmeldenummer: **90103743.2**

(51) Int. Cl.5: **C08G 61/12**

(22) Anmeldetag: **26.02.90**

(30) Priorität: **04.03.89 DE 3907027**

(43) Veröffentlichungstag der Anmeldung:
**12.09.90 Patentblatt 90/37**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Koch, Jürgen, Dr.**
**Woogstrasse 36**
**D-6708 Neuhofen(DE)**
Erfinder: **Heinz, Gerhard, Dr.**
**Im Vogelsang 2**
**D-6719 Weisenheim(DE)**

(54) **Verfahren zur Herstellung von Polyaryletherketonen durch elektrophile Polykondensation.**

(57) Verfahren zur Herstellung von Polyaryletherketonen, welche Einheiten der Formel

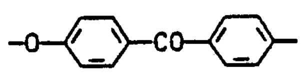

enthalten, durch elektrophile Polykondensation unter Verwendung von Carbonsäurehalogeniden als Monomerbestandteil in Gegenwart einer Lewis-Säure und gegebenenfalls einer Lewis-Base in einem inerten Lösungsmittel, wobei man als Carbonsäurehalogenid Oxalsäuredihalogenide oder deren Mischungen mit anderen Carbonsäurehalogeniden verwendet.

EP 0 386 582 A2

## Verfahren zur Herstellung von Polyaryletherketonen durch elektrophile Polykondensation

Die vorliegende Erfindung betrifft ein Verfahren zur Herstellung von Polyaryletherketonen, welche Einheiten der Formel

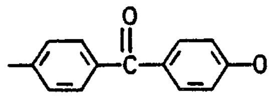

enthalten, durch elektrophile Polykondensation unter Verwendung von Carbonsäurehalogeniden als Monomerbestandteil in Gegenwart einer Lewis-Säure und gegebenenfalls einer Lewis-Base in einem inerten Lösungsmittel.

Polyaryletherketone gehören zur Klasse der hochtemperaturbeständigen Thermoplaste und zeichnen sich neben ihrer guten Temperaturbeständigkeit vor allem durch gute mechanische Eigenschaften und eine ausgezeichnete Lösungsmittelbeständigkeit aus.

Prinzipiell lassen sich Polyaryletherketone auf nukleophilem oder auf elektrophilem Weg herstellen, und entsprechende Verfahren sind in der Literatur beschrieben. Bei der elektrophilen Verfahrensweise werden allgemein aromatische Dicarbonsäurehalogenide oder Phosgen mit geeigneten aromatischen Verbindungen, welche zwei durch elektrophile Substitution austauschbare Wasserstoffatome enthalten, umgesetzt oder ein aromatisches Carbonsäurehalogenid, welches sowohl eine Säurehalogenidgruppe als auch ein substituierbares Wasserstoffatom enthält, mit sich selbst polykondensiert. Als Katalysatoren werden in der Regel Lewis-Säuren eingesetzt. In den US-A 3441538, US-A 3442857, US-A 3953400, DE 3241444, DE-A 3416445 und DE-A 3416446 werden elektrophile Polykondensationsreaktionen beschrieben, in denen HF als Lösungsmittel und $BF_3$ als Katalysator verwendet wird.

Gemäß einer Variante können auch halogenierte Kohlenwasserstoffe als Lösungsmittel und andere Lewis-Säuren, z.B. $AlCl_3$ als Katalysator verwendet werden.

Schließlich ist es nach der Lehre der WO 84/03891 und WO 84/03892 vorteilhaft, die Reaktion in Gegenwart einer Lewis-Base durchzuführen.

Zur Herstellung von Polyaryletherketonen, welche Einheiten der Formel

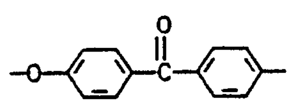

enthalten, ist es erforderlich, als Monomere Carbonsäurehalogenide von Diphenyletherderivaten oder Phosgen einzusetzen. Die erstgenannte Gruppe von Monomeren, zu der z.B. p-Phenoxybenzoylchlorid und 4,4′-Diphenyletherdicarbonsäuredihalogenide zählen, ist nur sehr aufwendig und kostenintensiv herzustellen.

Die Verwendung von Phosgen als Monomer ist in der Literatur z.B. in der EP-A 135938 und der DE-A 3542481 beschrieben. Da jedoch Phosgen wesentlich weniger reaktiv ist als aromatische Dicarbonsäurehalogenide haben die auf diese Weise erhältlichen Produkte nur unbefriedigend niedrige Molekulargewichte. Hinzu kommt, daß Phosgen extrem giftig ist und als Gas nur schwer in der für eine Polykondensation erforderlichen Genauigkeit dosiert werden kann.

Aufgabe der vorliegenden Erfindung war es daher, ein Verfahren zur Herstellung von Polyaryletherketonen mit Einheiten

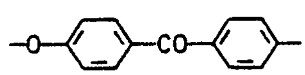

zur Verfügung zu stellen, welches wirtschaftlich und sicher durchzuführen ist und zu Produkten mit ausreichend hohem Molekulargewicht führt.

Diese Aufgabe wird erfindungsgemäß gelöst durch ein Verfahren zur Herstellung von Polyaryletherketonen, welche Einheiten der Formel

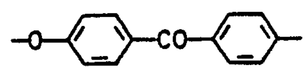

enthalten, durch elektrophile Polykondensation unter Verwendung von Carbonsäurehalogeniden als Monomerbestandteil in Gegenwart einer Lewis-Säure und gegebenenfalls einer Lewis-Base in einem inerten Lösungsmittel, dadurch gekennzeichnet, daß man als Carbonsäurehalogenid Oxalsäuredihalogenide oder deren Mischungen mit anderen Carbonsäurehalogeniden verwendet.

Bevorzugte Ausführungsformen des erfindungsgemäßen Verfahrens sind den Unteransprüchen und der nachfolgenden detaillierten Beschreibung zu entnehmen.

Das beanspruchte Verfahren eignet sich zur Herstellung von Polyaryletherketonen mit beliebigen wiederkehrenden Einheiten neben den Einheiten

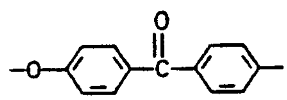 ,

d.h. prinzipiell allen Polymeren, in deren Hauptkette aromatische Struktureinheiten im wesentlichen durch -CO- oder -O-Brücken miteinander verknüpft sind. Neben diesen Verknüpfungen können in kleineren Anteilen auch andere verknüpfende Einheiten vorhanden sein.

Als bevorzugte weitere wiederkehrende Einheiten seien solche der allgemeinen Formeln I und/oder II bzw. deren kernsubstituierte $C_1$-$C_6$-Alkyl-, $C_1$-$C_6$-Alkoxy-Aryl-, Chlor- oder Fluorderivate genannt.

Einheiten der allgemeinen Formel I haben die Struktur

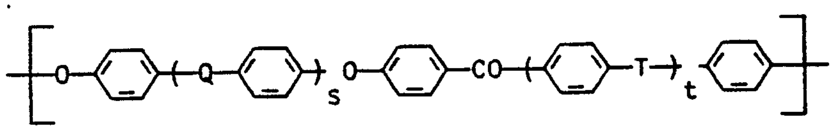 I

wobei s und t jeweils den Wert 0,1, 2 oder 3 haben und Q und T jeweils -O-oder -CO- sein können und, wenn s den Wert 1 hat und Q -CO- ist, Z nicht den Wert 0 hat.

Einheiten der allgemeinen Formel II haben die Struktur

$\{O\text{-}Ar^1\{Q'\text{-}Ar^2\}_{s'}O\text{-}Ar^3\text{-}CO\{Ar^4\text{-}T'\}_{t'}Ar^5\}$, II

wobei $Ar^1$, $Ar^2$, $Ar^3$, $Ar^4$ und $Ar^5$ unabhängig voneinander jeweils eine p-Phenylen-, m-Phenylen-, Biphenylen- oder Naphthylengruppe oder ein $C_1$-$C_6$-Alkyl, $C_1$-$C_6$-Alkoxy-, Aryl-, Chlor- oder Fluorderivat derselben darstellen, $Q'$ und $T'$ jeweils -O- oder -CO- sein können und $s'$ und $t'$ jeweils den Wert 0,1, 2 oder 3 haben, mit der Maßgabe, daß mindestens einer der Gruppen $Ar^1$, $Ar^2$, $Ar^3$, $Ar^4$ oder $Ar^5$ eine m-Phenylen-, Biphenylen- oder Naphthylengruppe oder ein $C_1$-$C_6$-Alkyl-, $C_1$-$C_6$-Alkoxy-, Aryl-, Chlor- oder Fluorderivat einer solchen Gruppe ist.

Stellvertretend für wiederkehrende Einheiten, die unter die allgemeine Formel I fallen, seien die nachstehenden genannt:

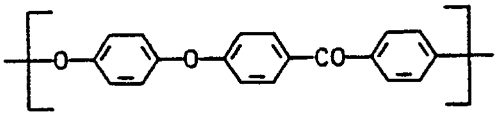
(I1)

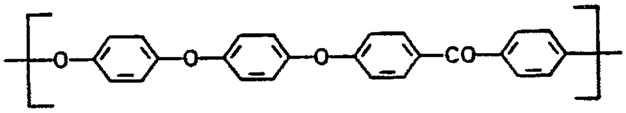
(I2)

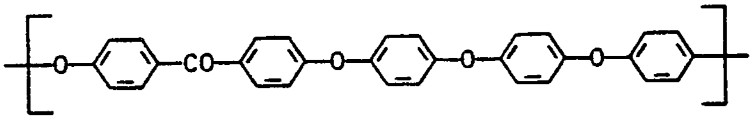
(I3)

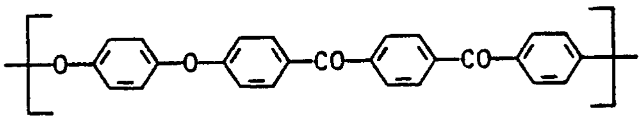
(I4)

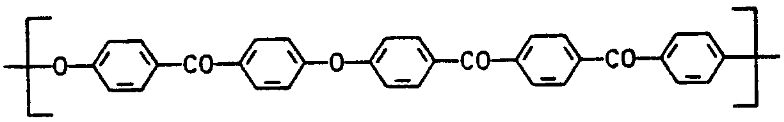
(I5)

Im Falle der Polyaryletherketone mit wiederkehrenden Einheiten der allgemeinen Formel II werden solche, in denen beide Substituenten Q′ und T′ jeweils eine -CO-Gruppe darstellen, sowie solche, in denen die wiederkehrenden Einheiten der allgemeinen Formel II folgenden Aufbau haben

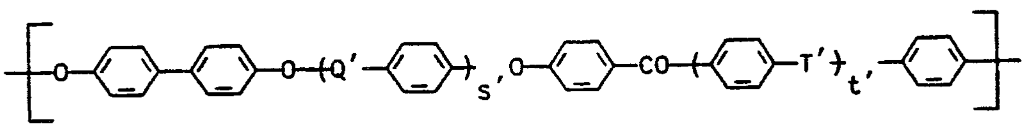
(II)

wobei die aromatischen Ringe durch $C_1$-$C_6$-Alkyl, $C_1$-$C_6$-Alkoxy-, Aryl-, Chlor- oder Fluorgruppen substituiert sein können und Q′, T′, s′ und t′, die in Anspruch 1 angegebene Bedeutung haben, bevorzugt.

Als Beispiele für wiederkehrende Einheiten der allgemeinen Formel II seien stellvertretend die nachstehenden genannt:

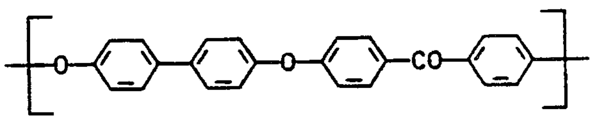
(II1)

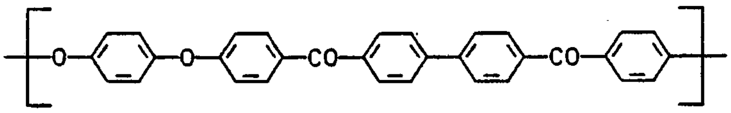
(II2)

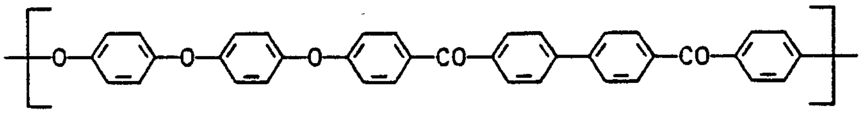
(II3)

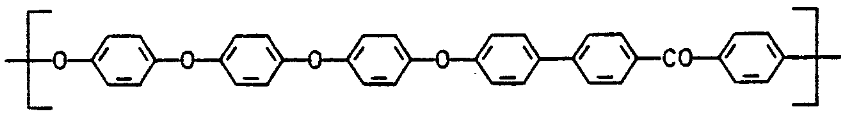
(II4)

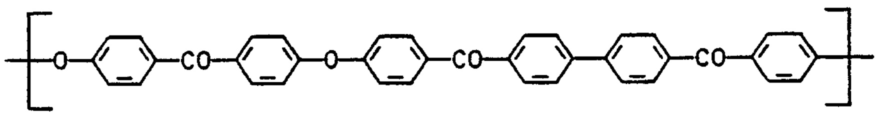
(II5)

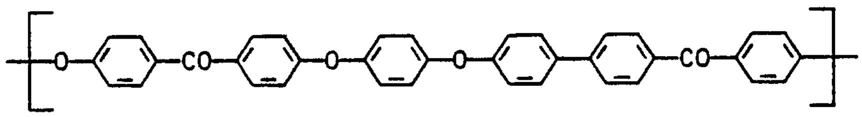
(II6)

Die in den Formeln (II1)-(II6) enthaltenen Diphenyleneinheiten können durch Naphthyleneinheiten ersetzt werden.

Die Herstellung von Polyaryletherketonen des vorstehend beschriebenen Aufbaus durch elektrophile Polykondensation läßt sich prinzipiell durch drei allgemeine Gleichungen darstellen:

a)

$$X-\overset{O}{\overset{\|}{C}}-Ar^1-\overset{O}{\overset{\|}{C}}-X + H-Ar^2-H \rightarrow \{Ar^2-\overset{O}{\overset{\|}{C}}-Ar^1-\overset{O}{\overset{\|}{C}}\} + 2\ HX$$

b)

$$X-\overset{O}{\overset{\|}{C}}-X + H-Ar^2-H \rightarrow \{Ar^2-\overset{O}{\overset{\|}{C}}\} + 2\ HX$$

c)

$$n\ H-Ar^3-\overset{O}{\overset{\|}{C}}-X \rightarrow [-Ar^3-\overset{O}{\overset{\|}{C}}\}_n + HX$$

Dabei steht X in diesen allgemeinen Gleichungen für Cl, Br, F oder I, vorzugsweise Cl, und $Ar^1$, $Ar^2$ und $Ar^3$ stellen zweiwertige aromatische Reste dar, die entsprechend den wiederkehrenden Einheiten des gewünschten Polyaryletherketons gewählt werden.

Wie bereits erwähnt, liegt der Vorteil des erfindungsgemäßen Verfahrens darin, daß für die Herstellung der wiederkehrenden Einheiten

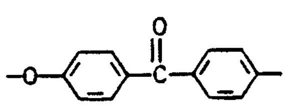

anstelle von Phosgen oder Carbonsäurehalogeniden von Diphenyletherderivaten Oxalsäuredihalogenide, vorzugsweise Oxalsäuredichlorid eingesetzt wird, welche im Vergleich zu den Diphenyletherderivaten wesentlich kostengünstiger sind und gegenüber Phosgen den Vorteil der besseren Dosierbarkeit und der geringeren Toxizität aufweisen.

Die Reaktion mit Oxalsäuredihalogeniden, insbesondere Oxalsäuredichlorid verläuft sehr sauber und selektiv unter Bildung der gewünschten Einheiten im Polyaryletherketon.

Die Reaktionsbedingungen sind dabei die gleichen, wie sie allgemein für die elektrophile Herstellung bekannt sind. Neben dem bevorzugten Oxalsäuredichlorid können auch noch weitere Carbonsäurehalogenide

$X-\overset{O}{\overset{\|}{C}}-Ar^1-\overset{O}{\overset{\|}{C}}-X$ bzw.

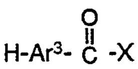

eingesetzt werden, wobei $Ar^1$ bzw. $Ar^3$ vorzugsweise die folgende Bedeutung haben

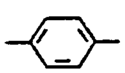 , 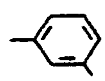 , 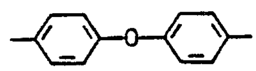 , 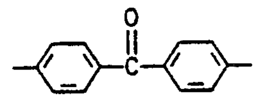 ,

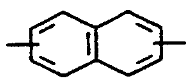 und 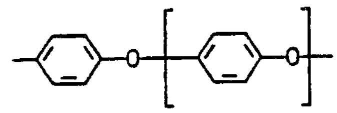 ,

wobei die drei erstgenannten Verbindungen besonders bevorzugt werden. Weitere geeignete Säurehalogenide sind z.B. in der US-A 3956240 beschrieben.

Als bevorzugte Verbindungen $H^3Ar^{23}H$ gemäß den vorstehend angegebenen Reaktionsgleichungen seien hier stellvertretend Diphenylether, 4,4′-Diphenoxybenzophenon, 1,4-Diphenoxybenzol und 4-Phenoxydiphenyl genannt. Weitere geeignete Verbindungen sind z.B. der bereits erwähnten US-A 3956240 und der US-A 4239884 zu entnehmen, auf die hier wegen näherer Einzelheiten verwiesen sei.

Die elektrophile Polykondensation der vorstehend beschriebenen Monomeren wird in Gegenwart einer Lewis-Säure in einem unter den Reaktionsbedingungen inerten Lösungsmittel durchgeführt. Die Lewis-Säure wird dabei in einem molaren Überschuß, bezogen auf die molare Menge an eingesetzten Carbonylgruppen bzw. Säurehalogeniden verwendet, wobei der molare Über schuß ausreichend sein muß, um die Reaktion zu katalysieren. Im allgemeinen reicht ein Überschuß von 2 bis 80, vorzugsweise von 5 bis 30 mol% Lewis-Säure, bezogen auf die eingesetzte Menge an aktiven, d.h. an der Reaktion teilnehmenden Carbonylgruppen, für diesen Zweck aus.

Der notwendige Überschuß hängt natürlich auch von der Art der eingesetzten Monomeren ab; falls in Comonomeren basische Gruppen (z.B. Sulfongruppen) vorhanden sind, kann es erforderlich sein, einen höheren Überschuß an Lewis-Säure einzusetzen.

Mit dem Begriff Lewis-Säure sind für die vorliegende Erfindung grundsätzlich alle Verbindungen, die ein einsames Elektronenpaar von einer anderen Verbindung aufnehmen können, gemeint. Beispielhaft seien hier nur $AlCl_3$, $AlBr_3$, $Sb_2Cl_5$, $Sb_2F_5$, $InCl_3$ $GaCl_3$, $BCl_3$, $BF_3$, $ZnCl_2$, $FeCl_3$, $SnCl_4$, $TiCl_4$ und $MoCl_5$ genannt, wovon insbesondere wasserfreies $AlCl_3$ bevorzugt wird.

Gemäß einer bevorzugten Ausführungsform des Verfahrens wird die Polykondensation in Gegenwart von 0,01 bis 4 mol, vorzugsweise 0,05 bis 2 mol, einer Lewis-Base, bezogen auf die molare Menge an Säurehalogenidgruppen durchgeführt. Diese steuert in gewissem Maße die Reaktion und unterdrückt unter anderem unerwünschte Nebenreaktionen (z.B. die ortho-Substitution aktivierter Aryloxygruppen). Geeignete Lewis-Basen für diese Zwecke werden detailliert in der WO 84/03891 beschrieben, auf die hier wegen näherer Einzelheiten verwiesen sei. Nur beispielhaft seien Amide, Amine, Ester, Ether, Ketone, Nitrile, Nitroverbindungen, Phosphine, Phosphinoxide, Sulfide, Sulfone, Sulfonamide und Sulfoxide genannt, wobei darauf geachtet werden sollte, daß die Lewis-Base zum einen nicht acylierend, alkylierend oder arylierend wirkt, zum anderen selbst nicht acyliert wird.

Bevorzugte Lewis-Basen sind N-Methylformamid, N,N-Dimethylformamid, N,N-Dimethylacetamid, 1-Methyl-2-Pyrrolidon, Aceton, Benzophenon, Dimethylsulfon und Alkalimetallchloride, um nur einige zu nennen.

Als inerte Lösungsmittel werden vorzugsweise polare Lösungsmittel eingesetzt, deren Dielektrizitätskonstante mindestens 2,5, vorzugsweise 4,0 bis 25 (bei 25 °C) beträgt. Beispielhaft seien hier Methylenchlorid, Schwefelkohlenstoff, 1,2-Dichlorethan, 1,1,2,2-Tetrachlorethan und 1,2-Dichlorbenzol sowie deren Mischungen genannt.

Bei Verwendung von $BF_3$ als Lewis-Säure hat sich HF als Lösungsmittel bewährt.

Die Temperatur, bei der die Reaktion durchgeführt wird, liegt im allgemeinen im Bereich von -50 bis +150 °C, vorzugsweise im Bereich von -20 bis +50 °C.

Es versteht sich, daß alle Lösungsmittel und Monomere möglichst wasserfrei eingesetzt werden sollten.

Gemäß einer bevorzugten Ausführungsform des erfindungsgemäßen Verfahrens werden der Reaktionsmischung 0,1 bis 10 mol%, vorzugsweise 0,2 bis 8 mol%, bezogen auf die Menge an eingesetztem Carbonsäurehalogenid, einer Verbindung zugesetzt, die Carbonsäuren in ihre entsprechenden Carbonsäurehalogenide, vorzugsweise deren Säurechloride überführt.

Vorteilhaft wird die Verbindung vor Beginn der Polykondensation insbesondere vor der Zugabe des Säurehalogenids, zur Reaktionsmischung, zugesetzt, sie kann jedoch prinzipiell auch noch während der Kondensation zugegeben werden, solange noch keine unerwünschten Reaktionen aufgetreten sind.

Für diesen Zweck geeignete Verbindungen sind insbesondere Halogenverbindungen des Phosphors und des Schwefels, wobei Halogenverbindungen des Phosphors bevorzugt werden. Hier seien nur $PCl_3$, $POCl_3$, $PCl_5$ und $SOCl_2$ genannt, wovon Phosphoroxytrichlorid bevorzugt wird.

Nach erfolgter Polykondensation arbeitet man die Reaktionsmasse nach an sich bekannten und in der Literatur beschriebenen Verfahren auf. Vorzugsweise wird hierzu eine Lewis-Base zugegeben, die den Lewis-Säure/Polymer-Komplex und auch evtl. noch vorhandene Mengen der zugesetzten Verbindung, die Säuren in ihre Halogenide überführt, abbaut. Beispiele für solche Lewis-Basen finden sich in der bereits erwähnten WO 84/03891. Bevorzugt werden Wasser und Methanol oder deren Mischungen. Nach dieser Dekomplexierung und gegebenenfalls Zerkleinerung des Produkts kann dieses zur Reinigung noch mit einem geeigneten Lösungsmittel extrahiert werden.

Das erfindungsgemäße Verfahren erlaubt auf einfachem Weg die Herstellung von Polyaryletherketonen mit Einheiten O-ph-CO-ph- ohne daß teure oder stark toxische Monomere verwendet werden müssen.

Beispiel 1 (Vergleich, Phosgen als Säurehalogenid)

In einem 1 L-Dreihalskolben mit Rührer und Stickstoffeinleitung und einem zusätzlichen gebogenen Gaseinleitungsrohr, das bis zum Boden des Gefäßes reichte, wurden 200 ml getrocknetes Methylenchlorid vorgelegt.

Bei -20 °C wurden 160.01 g (1.2 Mol) wasserfreies Aluminiumtrichlorid suspendiert. Dazu wurden langsam 56.477 g (0.600 Mol) Dimethylsulfon gegeben. Bei -15 °C wurden 68.084 g (0.400 Mol) Diphenylether zugegeben. Die zum Einwiegen und Dosieren der Einsatzstoffe verwendeten Gefäße und Pulvertrichter wurden mit 20 ml trockenem Methylenchlorid nachgespült. Bei -15 °C wurden dann 39.566 g (0.400 Mol) Phosgen gasförmig einkondensiert. Die Temperatur wurde innerhalb von 20 Minuten auf 25 °C erhöht und die Reaktionsmasse 24 Stunden bei dieser Temperatur gehalten. Auch nach dieser langen Reaktionszeit war kein wesentlicher Viskositätsanstieg des Reaktionsgemisches zu beobachten. Das Reaktionsgemisch wurde aus dem Kolben entfernt und in einem Haushaltsmixer mit 2 Liter Eiswasser dekomplexiert und zerkleinert. Das erhaltene Polymerpulver wurde 5 mal 30 Minuten mit 5 Liter kochendem Wasser extrahiert und im Vakuum bei 150 °C getrocknet.

Das so erhaltene Polymer hatte die Struktur

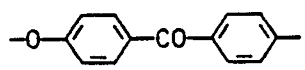

und wies eine inhärente Viskosität von 0.218 auf (gemessen in konz. Schwefelsäure, 0.5 g/100 ml).

Beispiel 2

In einem 1 L-Dreihalskolben mit Rührer und Stickstoffeinleitung wurden 200 ml getrocknetes Methylenchlorid vorgelegt. Bei -20 °C wurden 225.29 g (1.69 Mol) wasserfreies Aluminiumtrichlorid suspendiert. Dazu wurden langsam 56.477 g (0.600 Mol) Dimethylsulfon gegeben. Bei -20 °C wurden 68.084 g (0.400 Mol) Diphenylether zugegeben und dann unter ständigem Kühlen 50.772 g (0.400 Mol) frisch destilliertes Oxalsäuredichlorid zugetropft. Die zum Einwiegen und Dosieren der Einsatzstoffe verwendeten Gefäße und Pulvertrichter wurden mit 20 ml trockenem Methylenchlorid nachgespült.

Die Temperatur wurde innerhalb von 20 Minuten auf 15 °C erhöht, 30 Minuten bei dieser Temperatur gehalten, dann auf 25 °C erhöht und 6 Stunden bei dieser Temperatur gehalten. Die Reaktionsmasse erstarrte dabei unter Ausschäumen zu einer gummiartigen Masse. Nach Beendigung der Reaktion wurde die Reaktionsmasse aus dem Kolben entfernt, durch Zerschneiden mit einem Messer vorzerkleinert und in einem Haushaltsmixer mit 2 Liter Eiswasser dekomplexiert und weiter zerkleinert. Die erhaltenen Polymerflocken wurden 5 mal 30 Minuten mit 5 Liter kochendem Wasser extrahiert und im Vakuum bei 150 °C getrocknet.

Das so erhaltene Polymer wies eine inhärente Viskosität von 0.81, eine Glastemperatur von 163 °C und eine Schmelztemperatur von 363 °C auf.

Das Infrarot-Spektrum, das $^{13}C$-Kernresonanzspektrum und die Elementaranalyse waren in Übereinstim-

mung mit der Struktur

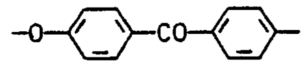

Untereinheiten der Struktur

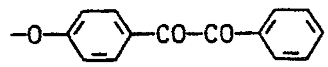

waren spektroskopisch nicht nachweisbar.

Beispiel 3

Unter den in Beispiel 2 beschriebenen Reaktionsbedingungen wurden
146.119 g (1.096 Mol) Aluminiumchlorid
28.239 g (0.300 Mol) Dimethylsulfon
1.237 g (0.009 Mol) Benzoylchlorid
25.386 g (0.200 Mol) Oxalsäuredichlorid
74.896 g (0.204 Mol) 4,4′-Diphenoxybenzophenon
in 220 ml Dichlormethan umgesetzt.

Das so erhaltene Polymer wies eine inhärente Viskosität von 0.818 auf. Das Infrarot-Spektrum und das $^{13}C$-NMR-Spektrum war in Übereinstimmung mit der Struktur

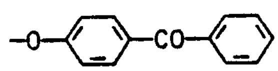

Das Polymer hatte eine Zersetzungstemperatur (5% Gewichtsverlust unter Stickstoff, Heizrate 10°/Min) von 535° C.

Beispiel 4

Unter den in Beispiel 2 beschriebenen Reaktionsbedingungen wurden
196.960 g (1.477 Mol) Aluminiumchlorid
35.298 g (0.375 Mol) Dimethylsulfon
1.054 g (0.008 Mol) Benzoylchlorid
31.733 g (0.250 Mol) Oxalsäuredichlorid
66.561 g (0.254 Mol) 1,4-Diphenoxybenzol
in 200 ml Methylenchlorid umgesetzt.

Das so erhaltene Polymer wies eine inhärente Viskosität von 0.870 auf. Die Glastemperatur betrug 145° C und die Schmelztemperatur 344° C. Das Infrarot-Spektrum und das $^{13}C$-Kernresonanzspektrum waren in Übereinstimmung mit der Struktur

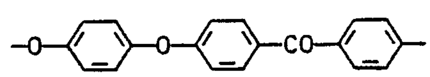

## Ansprüche

1. Verfahren zur Herstellung von Polyaryletherketonen, welche Einheiten der Formel

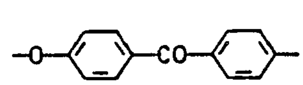

enthalten, durch elektrophile Polykondensation unter Verwendung von Carbonsäurehalogeniden als Monomerbestandteil in Gegenwart einer Lewis-Säure und gegebenenfalls einer Lewis-Base in einem inerten Lösungsmittel, dadurch gekennzeichnet, daß man als Carbonsäurehalogenide Oxalsäuredihalogenide oder deren Mischungen mit anderen Carbonsäurehalogeniden verwendet.

2. Verfahren nach Anspruch 1, dadurch gekennzeichnet, daß man der Reaktionsmischung eine Verbindung, die Carbonsäuren in ihre Halogenide überführt, vor oder zusammen mit den Carbonsäurehalogeniden zugibt.

3. Verfahren nach mindestens einem der Ansprüche 1 und 2, dadurch gekennzeichnet, daß man die Polykondensation in Gegenwart einer Lewis-Base durchführt.

4. Verfahren nach mindestens einem der Ansprüche 1 bis 3, dadurch gekennzeichnet, daß man als Verbindungen, die Carbonsäuren in ihre Halogenide überführen, Halogenverbindungen des Phosphors oder Schwefels verwendet.